# EUROPEAN PATENT APPLICATION

(11) **EP 3 987 907 A1**
(43) Date of publication of application: **27.04.2022**
(21) Application number: 21202847.6
(22) Date of filing: 15.10.2021
(51) Int. Cl.: A01D 34/82, A01D 75/20

(54) **POWER TOOL WITH AN ADJUSTABLE PROTECTIVE DEVICE**

(30) Priority: 20.10.2020 CN 202022347005 U
(71) Applicant: Techtronic Cordless GP, Anderson, SC 29621 (US)
(72) Inventor: SABIC, Adis, Kwai Chung (HK); ZENG, Zi Lin, Dongguan (CN); WANG, Zheng Jun, Dongguan (CN); XIE, You Lian, Dongguan (CN); WANG, Yan Jia, Dongguan (CN)
(74) Representative: Grünecker Patent- und Rechtsanwälte PartG mbB

(57) **Abstract**

The present description discloses a power tool (10) with an adjustable protective device (90), and comprises a handle (20), a link rod (40) and a head (50). The power tool is equipped with an operating unit (80), for example cutter heads (82), configured to output power for operation, a driving unit (60), configured to drive the operating unit, wherein the driving unit comprises a motor (61), a control unit (30), configured to control the driving unit, wherein the control unit comprises an actuator switch (31) and a control circuit board (35), and a power supply (25), configured to output power to the control unit and the driving unit. The protective device (90) is installed at a locked protection position on the head near the operating unit and is configured such that it can at least partially move away from the protection position to an unlocking position.

## Description

### Technical Field

The present utility model relates to the field of power tools, in particular to a power tool with an adjustable protective device.

### Background Art

Power tools are becoming more and more popular. In order to enhance the safety of power tools in use, protective devices are usually installed near the operating unit. The operating unit may be the cutter head of a cultivator, the cutter head of an edge trimmer, the mowing rope or the cutter head of a grass trimmer, etc. A protective device near the operating unit can prevent the user from being hit by dirt or stones that are turned over, or can prevent the user's body parts from accidentally coming into contact with the operating unit.

However, when the operating unit is clogged (by, for example, soil or grass clippings, etc.) and it is difficult to continue to rotate or swing, it is difficult to clean the operating unit because it is shielded by the protective device.

### Summary of the Utility Model

In view of the above background, the objective of the present utility model is to provide a power tool with an adjustable protective device.

Those skilled in the art will derive other objectives of the present utility model from the following description. Therefore, the preceding statement of objects is not exhaustive, and is only intended to explain some of the many objectives of the present utility model.

Therefore, one aspect of the present utility model is a power tool, comprising a handle and a head and equipped with: an operating unit, configured to output power for operation; a driving unit, configured to drive the operating unit, wherein the driving unit comprises a motor; a control unit, configured to control the driving unit, wherein the control unit comprises an actuator switch and a control circuit board; and a power supply, configured to output power to the control unit and the driving unit; and the power tool further comprises a protective device, which is installed at a protection position on the head near the operating unit and is configured such that it can at least partially move away from the protection position to an unlocking position.

In some embodiments, the protective device can rotate about a rotation axis relative to the head.

In some embodiments, the protective device at least partially encircles the operating unit.

In some embodiments, the protective device is constructed in an annular shape.

In some embodiments, the head is arranged such that it goes through the protective device.

In some embodiments, the power tool comprises an offset device, which offsets the protective device from the protection position to the unlocking position or offsets it from the unlocking position to the protection position.

In some embodiments, the power tool is provided with a locking device, which is configured to lock the protective device in the protection position and to be able to unlock so that the protective device can move away from the protection position.

In some embodiments, at least part of the locking device is configured to be linked to the protective device, so that the locking device locks the protective device in the protection position by the linkage when the protective device moves to the protection position.

In some embodiments, the locking device comprises a first joint feature located at either the head or the protective device and a second joint feature located at the other of the head or the protective device, wherein the first joint feature and the second joint feature can be engaged to lock the locking device.

In some embodiments, the first joint feature comprises a groove and the second joint feature comprises a pin that can rotate pivotally.

In some embodiments, the power tool cannot work when the protective device is not in the protection position.

In some embodiments, the control unit and the power supply are provided at one end of the handle while the driving unit and the operating unit are provided at one end of the head.

In some embodiments, one end of the handle and one end of the head are directly connected or are connected through a link rod.

In some embodiments, one or more of the control circuit board, the motor and the power supply are connected to the housing of the power tool directly or indirectly through a heat conducting part to transmit heat to the outside through the housing of the power tool.

In some embodiments, one end of the handle and one end of the head are connected through a link rod, and one or more of the control circuit board, the motor and the power supply are connected to the link rod directly or indirectly through a heat conducting part to transmit heat to the outside through the link rod.

In some embodiments, the power tool comprises a fan, one end of the handle and one end of the head are connected through a link rod, the housing of the power tool or the link rod is provided with two or more vents, which, under the action of the fan, form a cooling air circulating path with the inside of the power tool, one or more of the control circuit board, the motor and the power supply are provided in the cooling air circulating path, and the inside of the link rod is or is not part of the cooling air circulating path.

In some embodiments, the motor automatically rotates in the reverse direction by a predetermined number of turns when the output speed of the motor is measured to be lower than a threshold.

In some embodiments, the operating unit comprises one or more cutter heads.

In some embodiments, the cutter head(s) is (are) provided with one or more cutter teeth.

In some embodiments, the power tool is a cultivator, an edge trimmer or a grass trimmer.

### Brief Description of the Drawings

The above-described and additional characteristics of the present utility model will become apparent from the following description of preferred embodiments provided only as examples and in conjunction with the drawings. In the drawings:
Figure 1 is a schematic diagram of the power tool according to the embodiments of the present utility model;
Figure 2 is a schematic diagram of the handle according to the embodiments of the present utility model;
Figure 3 is a schematic diagram of passive heat dissipation according to the embodiments of the present utility model;
Figure 4 is a schematic diagram of the power tool according to the embodiments of the present utility model;
Figure 5 is a schematic diagram of the head according to the embodiments of the present utility model;
Figure 6 is a schematic diagram of active heat dissipation according to the embodiments of the present utility model;
Figure 7 is a schematic diagram of the driving unit according to the embodiments of the present utility model;
Figure 8 is a schematic diagram of the operating unit according to the embodiments of the present utility model;
Figure 9 is a schematic diagram of the connection between the protective device and the head according to the embodiments of the present utility model;
Figure 10 is a schematic diagram of the protective device according to the embodiments of the present utility model;
Figure 11 is a schematic diagram of the protective device away from the operating unit according to the embodiments of the present utility model;
Figure 12 is a schematic diagram of the locking device and the offset device according to the embodiments of the present utility model;
Figure 13 is a schematic diagram of the locking device according to the embodiments of the present utility model.

### Detailed Description of the Embodiments

In the subsequent claims and the foregoing description of the present utility model, unless otherwise required by the context for the expression or necessary implications, the term "comprise" or, for example, a variant (for example "comprising" or "comprises") is used in an inclusive manner, i.e. to indicate the existence of the feature, which does not exclude the presence or addition of other features in the various embodiments of the present utility model.

For example, "horizontal", "vertical", "transverse", "longitudinal", "above", "below" and similar terms are used herein for the purpose of describing the present utility model in the orientation of the utility model in normal use, and are not intended to limit the present utility model to any specific orientation.

It should be understood that reference to any publication of prior art cited herein does not constitute an admission that the publication forms part of the common general knowledge in the field in any country.

The power tool with an adjustable protective device in the present utility model may be, but is not limited to, a cultivator, an edge trimmer, a grass trimmer, etc. The following text describes the cultivator as an example in conjunction with the drawings and embodiments.

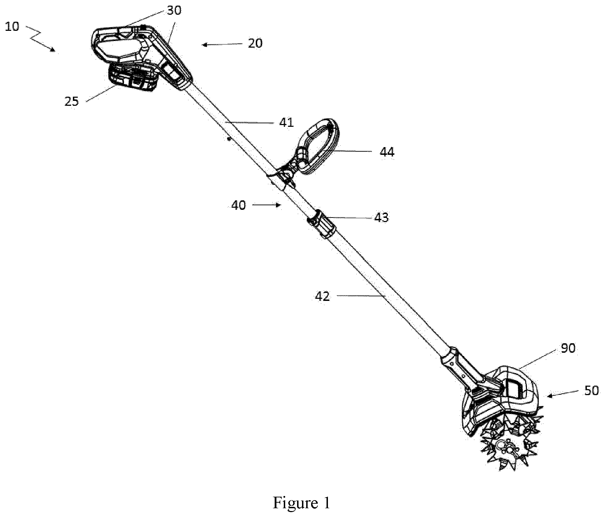

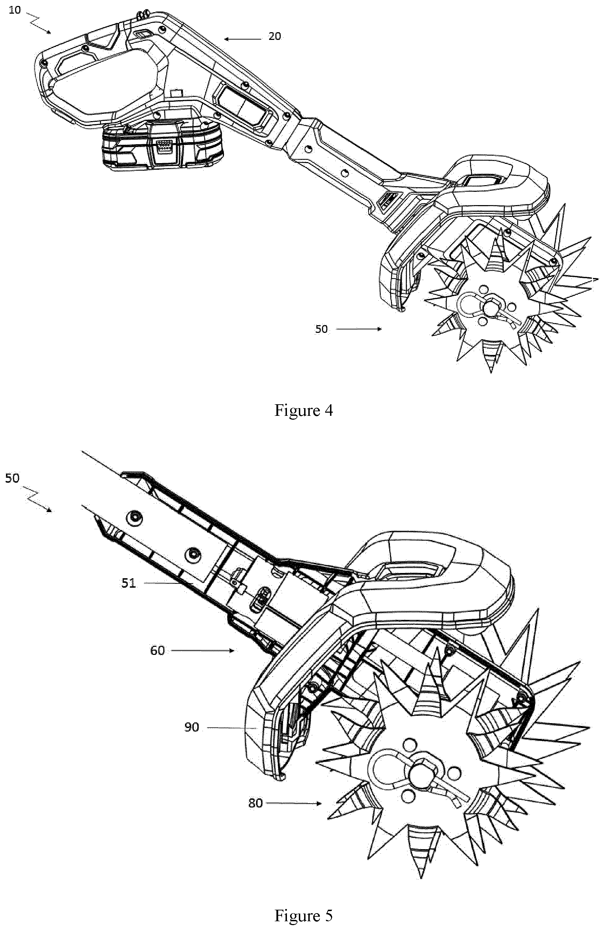

Figure 1 is a schematic diagram of the power tool 10 according to the embodiments of the present utility model. The power tool 10 comprises a handle 20 and a head 50. When the handle 20 and the head 50 are connected through a link rod 40, the user can stand or walk while moving the power tool 10 for operation. In some embodiments, it is possible to directly connect the handle 20 and the head 50, as shown in Figure 4, so that the user can hold the handle 20 and perform the operation close to the ground.

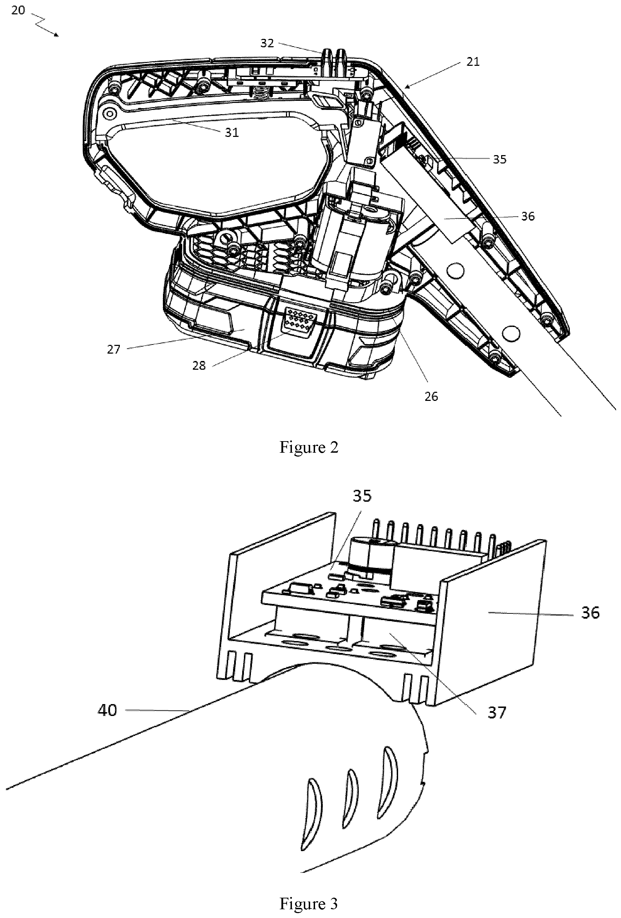

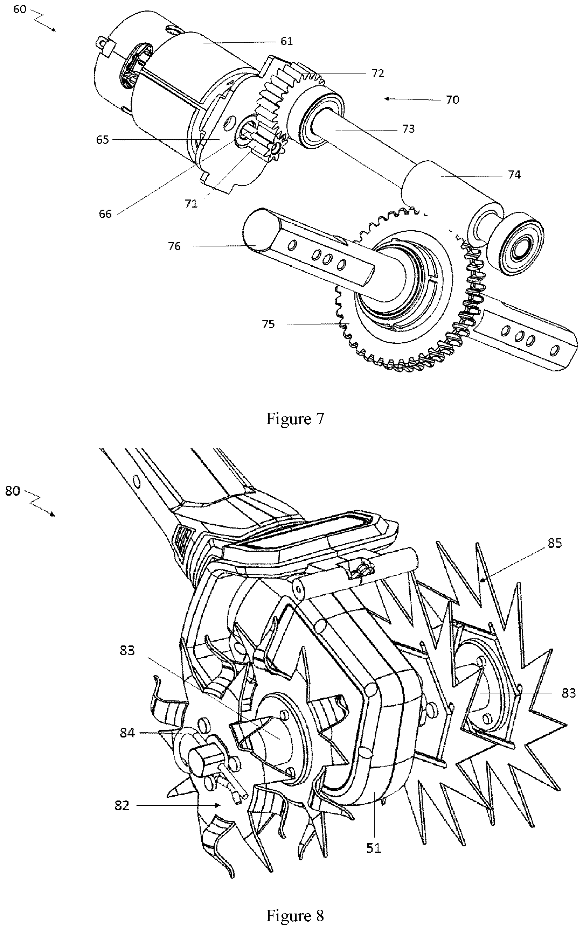

Figure 2 is a schematic diagram of the handle 20 according to the embodiments of the present utility model. With reference to Figures 1 and 2, the handle 20 comprises a handle housing 21, where a control unit 30 and a power supply 25 are provided at one end of the handle 20. In some embodiments, the handle 20 may comprise only the handle housing 21. In some embodiments, one or more of the power supply 25 (or a connector used to connect to the power supply 25), the control unit 30 and a driving unit 60 (Figure 7) may be provided at one end of the handle 20.

The handle housing 21 may be built in any shape, for example U-shaped, Y-shaped handles, etc. The handle housing 21 may be formed in one piece or consist of two or more parts. In the embodiment shown in Figure 2, the D-shaped handle housing 21 is formed by connecting two roughly symmetrical parts (of which only one part is shown), and has an essentially enclosed structure. A battery connector 26 is provided at the bottom or on the back of the handle housing 21. A rechargeable battery 27 may be detachably (for example through a battery latch 28) connected to the battery connector 26. The power supply 25 is not limited to the above position. The power supply 25 may be, but is not limited to, an AC power supply, a rechargeable battery, etc. In some embodiments, the battery case of the rechargeable battery 27 may be formed in one piece with the handle housing 21 or fixed on the handle housing 21, wherein the charging connector is provided on the handle housing 21.

The control unit 30 comprises an actuator switch 31 provided on the handle housing 21 for the user to operate, and may also comprise one or more of a safety switch 32, a locking switch, a speed control switch, and a motor reverse switch. The above switches may be provided separately, or two or more of the switches with different functions may be combined in one switch. The actuator switch 31 is the starting switch of a motor 61 (Figure 7). The safety switch 32 prevents spurious triggering of the actuator switch 31. The locking switch can lock the actuator switch 31 in the starting position. The speed control switch can control the speed of the motor 61 by adjusting the input power of the motor 61. The motor reverse switch controls the motor 61 to rotate in the forward or reverse direction. When the operating unit 80 (Figure 8) is entangled with grass, etc., the motor 61 may rotate in the reverse direction to release the entangled grass, etc. In some embodiments, the motor reversal function may be automatically activated when it is detected that the operating unit 80 is clogged, without the need of a motor reverse switch. For example, when the control unit 30 detects that the output speed of the motor 61 is lower than a threshold, it can control the motor 61 to automatically reverse the rotation by a predetermined number of turns.

The control unit 30 further comprises one or more control circuit boards 35. The control circuit board 35 may comprise a motor control module. The motor control module can be provided with one or more switching devices 37 (Figure 3) depending on the type of the motor 61, to control the starting and shutdown of the motor 61. The switching devices 37 include, but are not limited to, MOSFET, IGBT, etc. These switching devices 37 are part of the major heat generating devices of the control circuit board 35. Depending on whether the power tool 10 has a motor speed control function, the motor control module may optionally comprise a motor speed control module. Depending on the type of the power supply 25 and the type of the motor 61, variable resistance, voltage, frequency, or PWM may be used to change the input power of the motor 61, thereby changing the speed of the motor 61. Depending on whether the power tool 10 has a motor reversal function, the motor control module may optionally comprise a motor speed sensing module, a reverse control circuit, etc. Depending on the type of the power supply 25, the control circuit board 35 may further optionally comprise a power management module. The control circuit board 35 may also optionally comprise a fan control module, etc. The above embodiments are not restrictive.

In addition to the control circuit board 35, the power supply 25 and the motor 61 in the power tool 10 are also common heat generating components. One or more of the heat generating components may be connected to the housing directly or indirectly through a heat conducting part, and the housing is partially or entirely made of a material with high thermal conductivity. In some embodiments, one or more of the heat generating components may be connected to the link rod 40 directly or indirectly through a heat conducting part, and the link rod 40 may be partially or entirely made of a material with high thermal conductivity. Figure 3 is a schematic diagram of passive heat dissipation according to the embodiments of the present utility model. The control circuit board 35 is connected to the inner surface of the U-shaped arm of the radiator 36 through the switching device 37, and the outer surface of the U-shaped arm of the radiator 36 is connected to the outer circumference of one end of the link rod 40. The link rod 40 is optionally made of metal, which effectively conducts heat to the outside. Those skilled in the art can understand that the number, shape and position of the radiator 36 are not limited.

The link rod 40 may consist of one or more sections, and its length may be adjustable or non-adjustable. In the embodiment shown in Figure 1, the link rod 40 is a two-section telescopic link rod with an adjustable length. The upper rod 41 is connected to the handle 20 through an adapter at its rear end, the lower rod 42 is connected to the head 50 through an adapter at its front end, and the upper rod 41 and the lower rod 42 are connected through a fastening sleeve 43. The upper rod 41 may be optionally provided with an auxiliary handle 44 that is connected to the upper rod 41 through a fastener. The auxiliary handle 44 may be, but is not limited to, D-shaped, O-shaped handles, etc. The auxiliary handle 44 is optionally set to be adjustable in terms of angle or position relative to the upper rod 41.

In some embodiments, the power supply 25 and the control unit 30 are arranged at one end of the handle 20, the driving unit 60 and the operating unit 80 are arranged at one end of the head 50, and the handle 20 and the head 50 are connected through a link rod 40. The power line, earthing line, signal line or control line, etc. of the driving motor 61 may be provided in the link rod 40. Such configurations have many advantages, for example: the weights of the handle 20 and the head 50 are balanced; all of the control switches can be reasonably arranged on the handle 20, and they are closely connected to the control circuit board 35, thereby simplifying the wiring in the link rod 40; there is no need to extend the drive shaft 66 (Figure 7) of the motor inside the link rod 40, thereby simplifying the internal structure of the link rod 40; the control circuit board 35 is arranged away from the motor 61, thus reducing vibration of the control circuit board 35; and the heat generating components are scattered, thus facilitating the overall heat dissipation. In some embodiments, the power supply 25, the control unit 30, and the driving unit 60 are arranged at one end of the handle 20, the operating unit 80 is arranged at one end of the head 50, and the drive shaft 66 of the motor is provided in the link rod 40. In some embodiments, the power supply 25, the control unit 30, the driving unit 60, and the operating unit 80 are arranged at one end of the head 50, and there is no need to place any electronic or driving components in the link rod 40. Those skilled in the art can understand that the above embodiments are not restrictive.

The link rod 40 may also be an optional accessory. When the user needs to hold the handle 20 to work close to the ground, the link rod 40 can be removed, and the front-end adapter and the rear-end adapter can be directly joined, as shown in Figure 4.

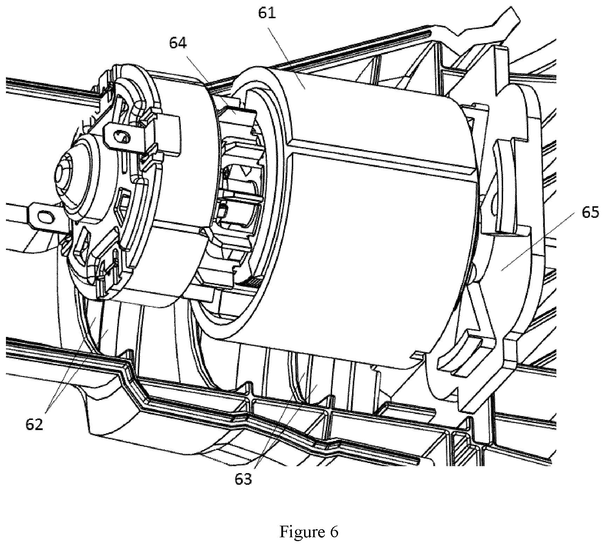

Figure 5 is a schematic diagram of the head 50 according to the embodiments of the present utility model. The head 50 comprises a head housing 51 (of which only half is shown). The driving unit 60, the operating unit 80 and the protective device 90 are arranged at one end of the head 50. The head housing 51 may be formed in one piece or in two or more pieces. Materials with high thermal conductivity can be selected for the head housing 51. Figure 6 is a schematic diagram of active heat dissipation according to the embodiments of the present utility model, wherein only half of the head housing 51 is shown and the housing of the motor 61 is not shown. The front end of the motor 61 is the end close to the operating unit 80, and the rear end is the end away from the operating unit 80. The head housing 51 near the front end of the motor 61 is provided with a set of vents 62, and the head housing 51 near the rear end is provided with another set of vents 63. The front end of the motor 61 is provided with a fan 64. Under the action of the fan 64, the heat generated by the motor 61 goes through a cooling air circulating path formed by the two sets of vents 62 and 63 (one for air in and the other for air out) and the cooling air from outside. In some embodiments, one or more of the heat generating components may be arranged on the cooling air circulating path. In some embodiments, the vents 62 and 63 may be provided on the head housing 51, the handle housing 21 or the link rod 40. In some embodiments, the inside of the link rod 40 may constitute a part of the cooling air circulating path. Those skilled in the art can understand that the vents 62 and 63 may also be any openings in other forms, for example the open end of the head housing 51 facing the operating unit 80. The above embodiments are not restrictive.

Figure 7 is a schematic diagram of the driving unit 60 according to the embodiments of the present utility model. The driving unit 60 comprises a motor 61 and a gear set 70. The motor 61 may be a DC motor or an AC motor, a brush motor or a brushless motor, depending on the type of the power supply 25. In the embodiment shown in Figure 7 (the head housing 51 and the operating unit 80 are not shown), the motor 61 is a DC brush motor, the front end is connected to a motor base 65 through a bearing, the drive shaft 66 goes through the motor base 65 to connect to the gear set 70, and the gear set 70 plays the role of deceleration and reversing. In the embodiment shown in Figure 7, the drive shaft 66 of the motor drives a small gear 71, and the small gear 71 engages with a large gear 72 for speed reduction. A worm 74 is formed at the front end of the output shaft 73 of the large gear, and the worm 74 drives a turbine 75 for reversing and further speed reduction. Both ends of the output shaft of the turbine protrude from the head housing 51 and engage with the operating unit 80. The output shaft of the turbine is the main shaft 76 of the operating unit 80. The main shaft 76 is essentially perpendicular to the extension direction of the link rod 40 and essentially parallel to the ground. Those skilled in the art can understand that the above embodiments are not restrictive, and other forms of gear sets 70 may be used, such as bevel gears, planetary gears, etc., and the main shaft 76 may be in different shapes, positions, or directions depending on the operating unit 80.

Figure 8 is a schematic diagram of the operating unit 80 (the protective device 90 is not shown) according to the embodiments of the present utility model. The operating unit 80 may be one or more cutter heads 82 provided on the main shaft 76, and one or more cutter teeth 85 may be provided on the cutter head 82. Each cutter head 82 may be equipped with the cutter teeth 85 in different shapes and numbers. In the embodiment of the cultivator shown in Figure 8, the cutter teeth 85 of the cutter head 82 on one side consist of uniformly spaced cutter teeth 85 that are bent in two opposite directions, protrude from the surface of the cutter head, and extend obliquely to the adjacent cutter head. The cutter teeth 85 of the cutter head 82 on the other side consist of uniformly spaced cutter teeth 85 that are arranged in the plane of the cutter head and inclined in a single direction of rotation. A spacer 83 is optionally provided between two adjacent cutter heads 82. The spacer 83 is optionally configured to fix adjacent cutter heads 82 together. The outer end of the main shaft 76 is optionally equipped with a fastener, for example a cutter head latch 84. When the operating unit 80 is clogged, the user can pull out the cutter head latch 84 to release the set of cutter heads 82 on the same side as the cutter head latch 84 and to remove the jammed soil or grass clippings. Those skilled in the art can understand that the cutter head latch 84 may also take other forms, for example a knob, etc. The operating unit 80 in the present utility model is not limited to the operating component of a cultivator.

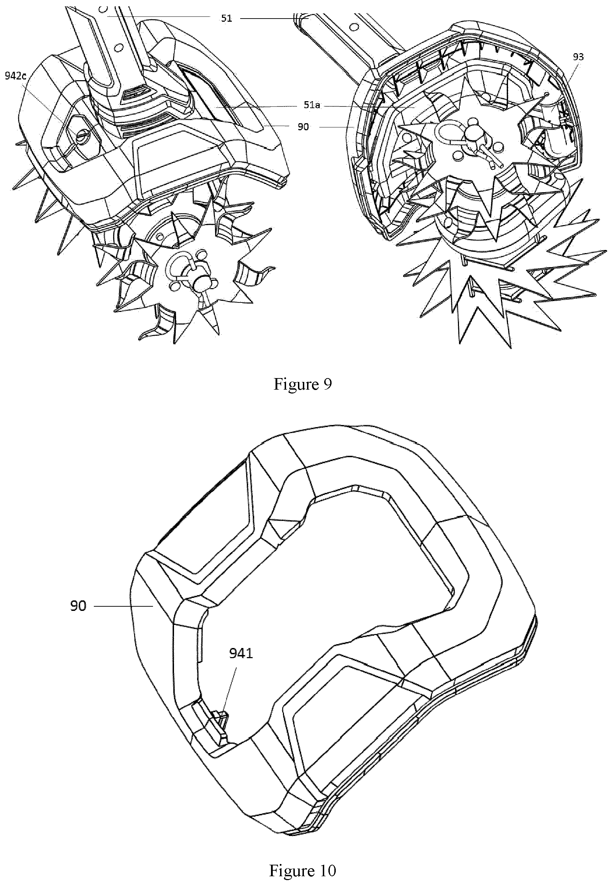

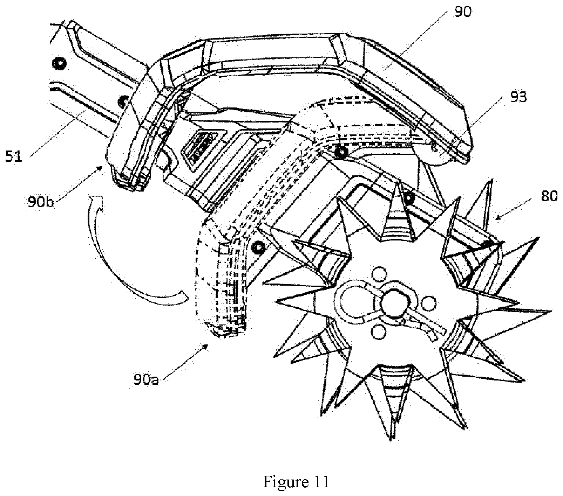

Figure 9 is a schematic diagram (from the upper and lower views) of the connection between the protective device 90 and the head 50 according to the embodiments of the present utility model. The protective device 90 is installed at a protection position 90a (the position marked by the dotted line in Figure 11) on the head 50 near the operating unit 80. Figure 10 is a schematic diagram of the protective device 90 according to the embodiments of the present utility model. With reference to Figures 9 and 10, the protective device 90 may be constructed in an annular shape and is penetrated by the head 50. The protective device 90 is connected to a wing 51a (approximately located near the motor base 65) extending from the head housing 51. The wing 51a may also be in an annular shape to fully engage with the protective device 90. In some embodiments, the protective device 90 may be in an arch shape or other suitable shapes to at least partially encircle the operating unit 80. The shape of the protective device 90 and the configuration of the protection position 90a can effectively block lifting mud, etc. or flying stones and prevent the user's body parts from accidentally coming into contact with the operating unit 80, while it will not excessively shield the user's sight during operation or interfere with sufficient contact between the operating unit 80 and the target, etc. In some embodiments, the protective device 90 may be made of at least partially transparent materials.

Figure 11 also shows a schematic diagram of the protective device 90 away from the operating unit 80 according to the embodiments of the present utility model (the part marked by the solid line in Figure 11). With reference to Figures 9 and 11, one side of the protective device 90 is provided with a rotation axis 93 that engages with the wing 51a, so that the protective device 90 can rotate about the rotation axis 93 relative to the head 50 to at least partially move away from the protection position 90a to an unlocking position 90b. In the embodiment shown in Figure 11, the unlocking position 90b may be, for example, a position farthest from the operating unit 80 that the protective device 90 can reach with respect to the other side of the rotation axis 93. In the unlocking position 90b, the annular protective device 90 stops rotating because its inner edge is blocked by the head housing 51. The rotation axis 93 may be arranged at any position where the protective device 90 and the head 50 are connected; more than one rotation axis 93 may also be provided so that different parts of the protective device 90 can rotate along their respective rotation axis 93. Those skilled in the art can understand that any variation of the rotation axis 93 is covered in the scope of the present utility model.

In some embodiments, the protective device 90 may be lifted upwards as a whole along the link rod 40 or removed from the power tool 10 so as to move away from the protection position 90a as a whole. Those skilled in the art can understand that any variation of the protective device 90 at least partially moving away from the protection position 90a to the unlocking position 90b is within the scope of the present utility model.

The power tool 10 is provided with a safety mechanism, so that the motor 61 stops running once the protective device 90 is not in the protection position 90a. For example, a microswitch is provided at the position where the protective device 90 and the head 50 are connected, or a photosensitive device is provided on the head housing 51 at a position shielded by the protective device 90, etc. Those skilled in the art can understand that the above embodiments are not restrictive.

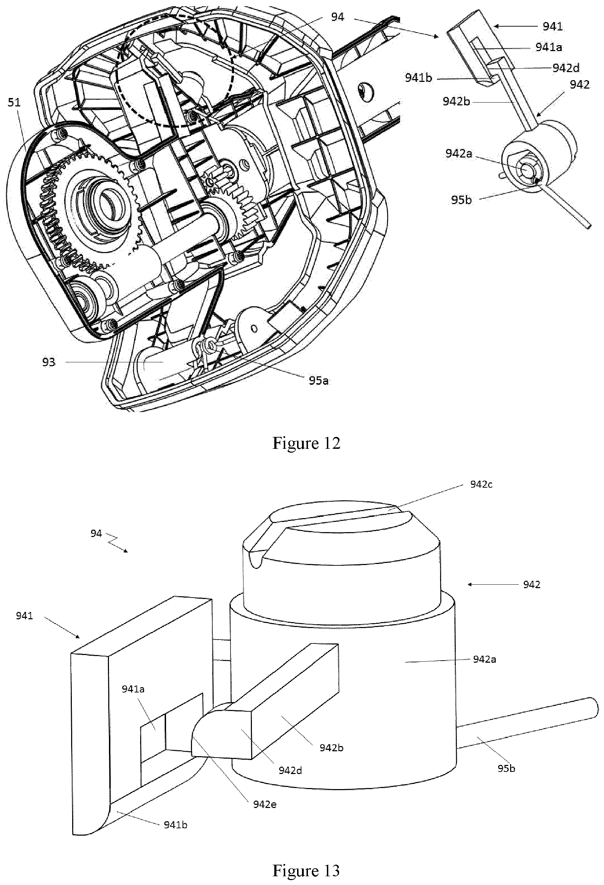

A locking device 94 may be provided between the protective device 90 and the head 50. The locking device 94 is configured to lock the protective device 90 in the protection position 90a, and the locking device 94 may also be configured to be able to unlock so that the protective device 90 can at least partially move away from the protection position 90a. In some embodiments, the locking device 94 may be directly operated by hand without the aid of tools. In other embodiments, the locking device 94 can switch between the protection position 90a and the unlocking position 90b only with the help of a tool. This can effectively prevent the safety risk caused by misoperation or spurious triggering of the locking device 94. For this, the locking device 94 may comprise a groove, for example, and, by means of the engagement of a coin with the groove, the user can use a coin to rotate and drive the locking device 94. Figure 12 is a schematic diagram of the locking device 94 and the offset device according to the embodiments of the present utility model, wherein only half of the head housing 51 is shown, the operating unit 80 and the main shaft 76 are not shown, and the right part shows a schematic detailed view of the locking device 94. Figure 13 is a schematic diagram of the locking device 94 from another point of view. With reference to Figures 11-13, the locking device 94 comprises a groove 941 provided on the protective device 90 and a pin 942 that can rotate pivotally and is provided on the head 50. The groove 941 comprises a rectangular groove 941a and an arc-shaped end face 941b located at the outer edge of the groove 941. The pin 942 comprises a pin shaft 942a, an L-shaped pin arm 942b, an operating knob 942c located on the pin shaft 942a and exposed to the outside of the head housing 51, a pin head 942d located on the top of the pin arm 942b and constituting one arm of the pin arm 942b, and an arc-shaped end face 942e located at the outer edge of the pin head 942d and opposite to the arc-shaped end face 941b. When the protective device 90 is in the protection position 90a, the pin head 942d is engaged in the groove 941a, and the protective device 90 is in the locked state. When the user turns the operating knob 942c linked with the pin shaft 942a, the pin shaft 942a drives the pin arm 942b to rotate, so that the pin head 942d leaves the groove 941a and the protective device 90 is unlocked. In some embodiments, the positions of the groove 941 and the pin 942 are interchangeable. Those skilled in the art can understand that other types of locking devices 94 may also be used, including, but not limited to, cylindrical pins, locking bolts, etc.

The embodiment shown in Figure 12 further comprises an offset device. In some embodiments, an offset spring 95a is provided on the rotation axis 93. For example, with reference to Figures 11-13, when the user cleans the operating unit 80 and turns the operating knob 942c, the pin head 942d leaves the groove 941a, and the protective device 90 is unlocked. Under the action of the offset spring 95a, the protective device 90 is offset around the rotation axis 93 from the protection position 90a to the unlocking position 90b. The offset spring 95a keeps the protective device 90 in the unlocking position 90b, which helps the user to clean the operating unit 80 without interference. In some embodiments, the offset spring 95a offsets the protective device 90 about the rotation axis 93 from the unlocking position 90b to the protection position 90a. In this way, the protective device 90 automatically returns to the protection position 90a without external force, thereby preventing the potential safety hazard arising from situations where the user forgets to lock the protective device 90.

In some embodiments, the offset spring 95b may be provided at the pin 942a. For example, with reference to Figures 11-13, when the protective device 90 is in the protection position 90a, the offset spring 95b offsets the pin 942d into the groove 941a, which can prevent accidental unlocking of the locking device 94 and ensure safety of the user. Those skilled in the art can understand that the offset device may be, for example, a torsion spring, or a tension spring or other elastic members, and the number, form and position of the offset device may vary as required.

The locking device 94 may also be configured to be at least partially linked with the protective device 90, so that the locking device 94 locks the protective device 90 in the protection position 90a by the linkage when the protective device 90 moves to the protection position 90a. In some embodiments, this is implemented by a wedge-shaped engagement surface between the groove 941 of the locking device 94 and the pin 942. In some embodiments, this is implemented by the aforementioned offset device. For example, with reference to Figures 11-13, when the protective device 90 is in the unlocking position 90b, the user may release the operating knob 942c, and the pin shaft 942a drives the pin arm 942b back to the offset position of the pin 942 under the action of the offset spring 95b. After the user finishes cleaning the operating unit 80, the protective device 90 is rotated to the protection position 90a. The arc-shaped end face 941b of the groove 941 will push the pin end surface 942e to move slightly towards a non-offset position of the pin 942 when approaching the protection position 90a. When the groove 941 completely enters the protection position 90a, the pin shaft 942a drives the pin arm 942b to the offset position of the pin 942 under the action of the offset spring 95b, and the pin head 942d is engaged in the groove position 941a, so that the protective device 90 can be automatically locked when reaching the protection position 90a. Those skilled in the art will understand that other one-way or non-return engagement features are also possible. The above embodiments are not restrictive, and their purpose is to make the structure simpler and the operation more convenient and safer.

While the present utility model has been illustrated and described in detail above in conjunction with the drawings, the description should be regarded as illustrative rather than restrictive; it should be understood that only exemplary embodiments are shown and described, and that they do not limit the present utility model in any way. It is understandable that any characteristic described herein may be used in any embodiment. The illustrative embodiments do not exclude each other or exclude other embodiments not listed herein. Therefore, the present utility model further provides a combination of one or more of the above-described exemplary embodiments. Modifications and variations may be made to the present utility model without departing from the spirit or scope of the present utility model. Therefore, such restrictions should be imposed only as indicated by the appended claims.

## Claims

1. Power tool, comprising a handle and a head and equipped with:
an operating unit, configured to output power for operation;
a driving unit, configured to drive the operating unit, wherein the driving unit comprises a motor;
a control unit, configured to control the driving unit, wherein the control unit comprises an actuator switch and a control circuit board;
a power supply, configured to output power to the control unit and the driving unit;
and the power tool further comprises a protective device, which is installed at a protection position in the head near the operating unit and is configured such that it can at least partially move away from the protection position to an unlocking position.

2. Power tool according to Claim 1, **characterized in that** the protective device can rotate about a rotation axis relative to the head.

3. Power tool according to Claim 1, **characterized in that** the protective device at least partially encircles the operating unit.

4. Power tool according to Claim 1, **characterized in that** the protective device is constructed in an annular shape.

5. Power tool according to Claim 4, **characterized in that** the head is arranged such that it goes through the protective device.

6. Power tool according to Claim 1, **characterized in that** the power tool comprises an offset device, which offsets the protective device from the protection position to the unlocking position or offsets it from the unlocking position to the protection position.

7. Power tool according to Claim 1, **characterized in that** the power tool is provided with a locking device, which is configured to lock the protective device in the protection position and to be able to unlock so that the protective device can move away from the protection position.

8. Power tool according to Claim 7, **characterized in that** at least part of the locking device is configured to be linked to the protective device, so that the locking device locks the protective device in the protection position by the linkage when the protective device moves to the protection position.

9. Power tool according to Claim 7, **characterized in that** the locking device comprises a first joint feature located at either the head or the protective device and a second joint feature located at the other of the head or the protective device, wherein the first joint feature and the second joint feature can be engaged to lock the locking device.

10. Power tool according to Claim 9, **characterized in that** the first joint feature comprises a groove and the second joint feature comprises a pin that can rotate pivotally.

11. Power tool according to Claim 1, **characterized in that** the power tool cannot work when the protective device is not in the protection position.

12. Power tool according to any of Claims 1-11, **characterized in that** the control unit and the power supply are provided at one end of the handle while the driving unit and the operating unit are provided at one end of the head.

13. Power tool according to any of Claims 1-11, **characterized in that** one end of the handle and one end of the head are directly connected or are connected through a link rod.

14. Power tool according to any of Claims 1-11, **characterized in that** the operating unit comprises one or more cutter heads, and the cutter head(s) is (are) provided with one or more cutter teeth.

15. Power tool according to any of Claims 1-11, **characterized in that** the power tool is a cultivator, an edge trimmer or a grass trimmer.
